# EUROPEAN PATENT SPECIFICATION

(11) **EP 0 622 795 B1**
(45) Date of publication and mention of the grant of the patent: **14.04.1999**
(21) Application number: 94830198.1
(22) Date of filing: 27.04.1994
(51) Int. Cl.: G11B 15/44

(54) **Device with soft touch mechanics for reproducing recorded tapes**
Verfahren mit weichem Berührungsmechanismus zur Wiedergabe von aufgenommenen Bändern
Equipement muni de mécanisme souple pour la reproduction de bandes enregistrées

(30) Priority: 28.04.1993 IT MC930026
(43) Date of publication of application: 02.11.1994
(73) Proprietor: SO.GE.MI.- S.p.A., Osimo Stazione (AN) (IT)
(72) Inventor: Sesso, Antonio, Colze' di Montegalda (VI) (IT); Persiani, Luigi, Osimo (AN) (IT)
(74) Representative: Baldi, Claudio

(56) References cited:
- DE-A- 3 320 094
- DE-A- 3 602 532
- GB-A- 2 090 459
- GB-A- 2 117 165
- US-A- 4 531 168

## Description

This invention concerns a device with soft touch mechanics as defined in the preamble of claim 1.

Soft touch mechanics is intended as a conventional system involving movements controlled by means of motors and an electronic control unit, connected to the push-button control panel of the appliance.

In current appliances, commonly known as "tape recorders" or "cassette recorders", two separate electric motors are used for operating the various mechanisms; one motor unwinds the tape during play-back while a secondary motor operates all the other functions, either directly or using the principle of kinematic motion: insertion and ejection of the tape, rewinding of the tape during play-back, fast forward and rewind.

Generally, in current models, once the secondary motor has completed the insertion of the tape, a specially designed double electromagnet releases the pinion of this motor from the mechanism which engages the tape holder box with the mechanism for rewinding of the tape during play-back.

The main motor is generally a D.C. motor which is sold with a self-regulating electronic control unit that adjusts voltage variations from 9 - 15 Volts thereby guaranteeing the forward movement of the tape at a steady rate, equal to a preset play-back value.

It is worth mentioning that said main motor rotates only in one direction.

As mentioned, the secondary motor is equipped with an electronic control unit designed specifically for the mechanics in question.

This means that while manufacturers of "tape recorder" mechanics on one hand simply need to purchase standard self-regulating motors normally available on the market, on the other hand they are forced to order electronic control units specifically designed for the management and control of the mechanics in question.

The innovative idea according to this invention involves the use of a standard first motor, namely a motor without an electronic self-regulating device, which performs all the main functions of the appliance thanks to the use of a single electronic control unit programmed to activate and control all the different operating modes that can be provided by "tape recorder" mechanics.

In other words, the idea according to the invention involves the use of a standard electric motor which rotates at different speeds in both directions (such as a conventional D.C. or A.C. motor or a brushless motor) combined with a microprocessor which determines and controls motor operation according to the function selected on the push-button control board of the appliance, said first motor thereby performing all the following main functions: unwinding the tape during play-back, rewinding of the tape during play-back, fast forward and rewind.

According to the inventive idea, the second motor is used only for the insertion and automatic ejection of the tape cassette, offering a number of important advantages.

First and foremost said second motors may be much smaller and considerably less expensive with respect to secondary motor used for current soft touch mechanics, and have a life of approximately 2000 operating hours with respect to the 40 hours or so actually required, considering its limited use.

Secondly, with respect to current mechanics, both the mechanism required to pass from the "automatic tape insertion" function to the "play-back winding" function and the double electromagnet currently used to perform this switching function can be eliminated.

The elimination of said double electromagnet not only indirectly involves the elimination of the relevant piloting electronics but also saves the labour time required for wiring the same.

Another important advantage offered is an appreciable reduction in noise and electrical disturbances, considering that when the appliance is in use only the first motor will be running.

The elimination of the above components leads to an additional advantage, namely more simple and compact mechanics with respect to conventional soft touch mechanics.

In the case of the device with soft touch mechanics for reproducing recorded tapes according to the invention, the first motor, which as already mentioned is a standard motor without self-regulating electronic control unit, operates the following movements:
- the kinematic motion which rotates the tape unwinding pins during play-back;
- the kinematic motion which rotates the pin of the rewinding reel during play-back and during the fast forward and rewind of the tape.

Obviously all the kinematic motions operated by the first motor are the same as those currently operated by the secondary motor; these kinematic motions have different characteristics according to the manufacturer in question and do not in any case fall within the principle of the idea according to the invention, which does not involve the structural configuration or the operating principle of the individual kinematic motion, but concerns the idea whereby all these kinematic motions are operated by a single motor, whose rotation rate is set and controlled by an electronic control unit according to the function selected on the push-button panel of the appliance.

In the case of the device with soft touch mechanics for reproducing recorded tapes according to the invention, the second motor operates only the movement of the kinematic motion which moves the tape holder box for the insertion or automatic ejection of the tapes; a micro-switch being provided to stop said motor as soon as these operations have been completed.

Thanks to a lever mechanism, this second motor also temporarily draws the tape roller away from the tape rewinding pin during fast forward and rewind of the tape.

In view of this new and limited use of the secondary motor, it was necessary to design a new kinematic motion specifically for the insertion and ejection of the tape as well as for automatically advancing and stopping the tape roller in order to activate rewinding of the tape during fast forward and rewind.

For major clarity the description of the invention continues with reference to the attached drawings which are intended for purposes of illustration and not in a limiting sense whereby:
- fig. 1 illustrates the means of transmission whereby the first and second motors transmit motion to the kinematic motions they operate;
- fig. 2 is a plan view of the tape holder box operated by the second motor;

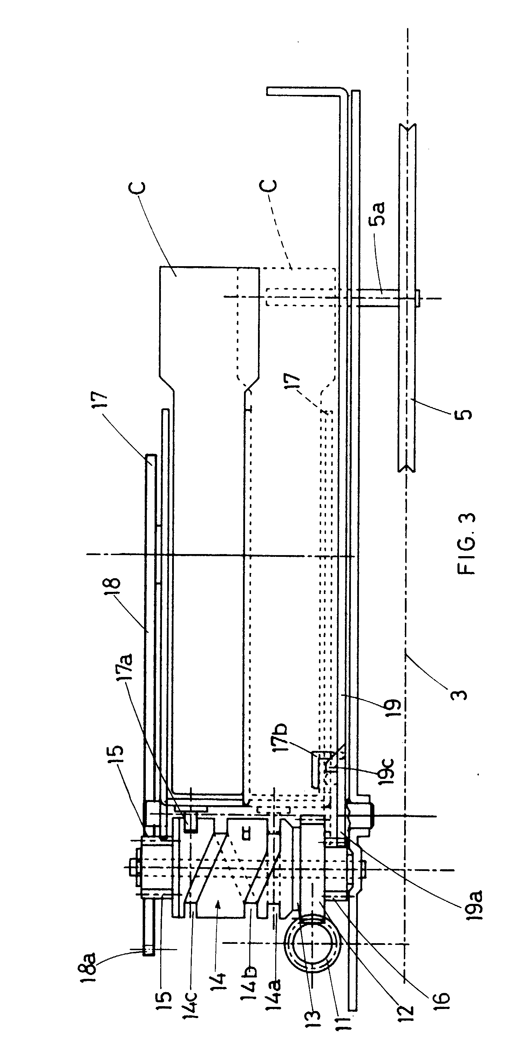

- fig. 3 is an elevation of the tape holder box operated by the second motor.

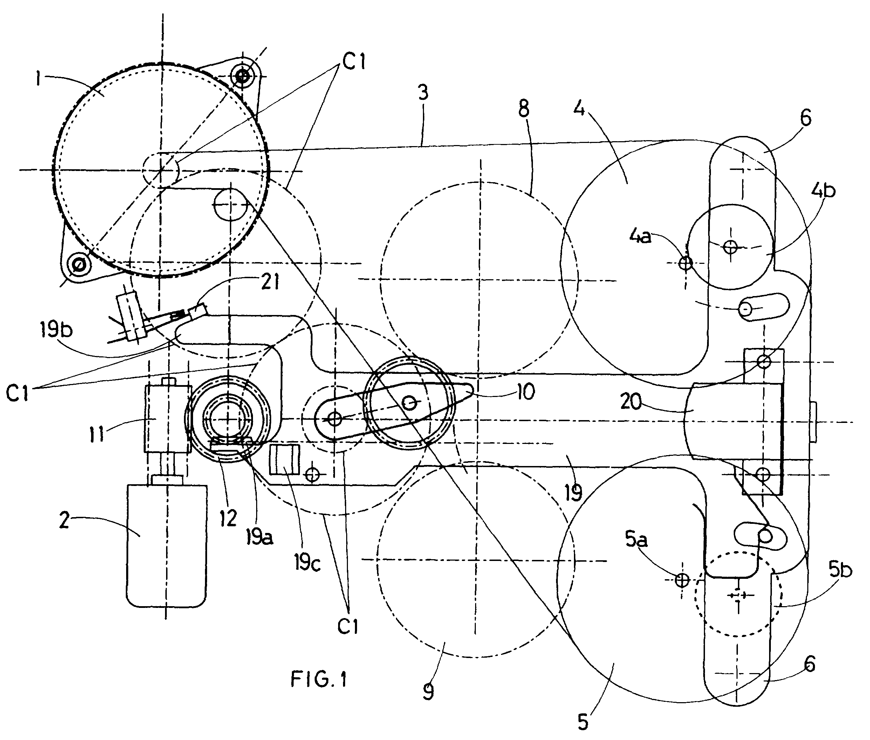

With reference to fig. 1 the device according to the invention consists of a first motor (1) and a secondary motor (2).

The rotating speed of the first motor (1) is determined from time to time by a microprocessor, not illustrated in the figure, according to the function selected on the push-button panel of the appliance.

Said microprocessor is a standard type and no data or information will be provided regarding its design or construction principle in this description.

In the preferred embodiment of the invention, illustrated in the enclosed drawings, the first motor (1) rotates, by means of a driving belt (3), flywheels (4 and 5) on which pins (4a and 5a) are keyed in order to unwind the tape during play-back.

Attention is once again drawn to the fact that the unwinding of the tape is performed in a conventional manner by means of idle revolving tape rollers (4b and 5b) mounted on an oscillating platform (6).

Motor (1) operates the two clutches (8 and 9) on which the two pins are keyed, the same being engaged by the two reel hubs of the tape in order to wind the tape; in other words, the transmission of the motion from the first motor (1) to clutches (8 and 9) is by means of a kinematic motion (C1) consisting of a number of geared engaging wheels, the last of which is mounted on a rocking lever (10) whose oscillation permits commutating the drive from one clutch wheel to another, whereby rewinding of the tape is obviously performed by the first or the second clutch wheel according to the winding direction of the tape being drawn by pins (4a and 5a) in both rotating directions.

The second motor (2), on the other hand, directly rotates a worm screw (11) having a horizontal axis, which engages a geared wheel (12) keyed on a shaft (13) having a vertical axis on which a centre cam (14) and two end gears (15 and 16) are fixed.

Said cam consists of a cylindrical body whose lateral surface has a groove characterized by an initial circular section (14a) at the base which continues with a helicoidal section (14b)) to terminate at the top with a final circular section (14c).

A rod (17a) projecting from the side of the tape holder box (17) being housed in said groove.

The end gear (15) at the top of the shaft (13) engages with an angular toothed section (18a) being part of the ejection lever (18), which oscillates on a horizontal plane around a vertical pivoting pin (18b).

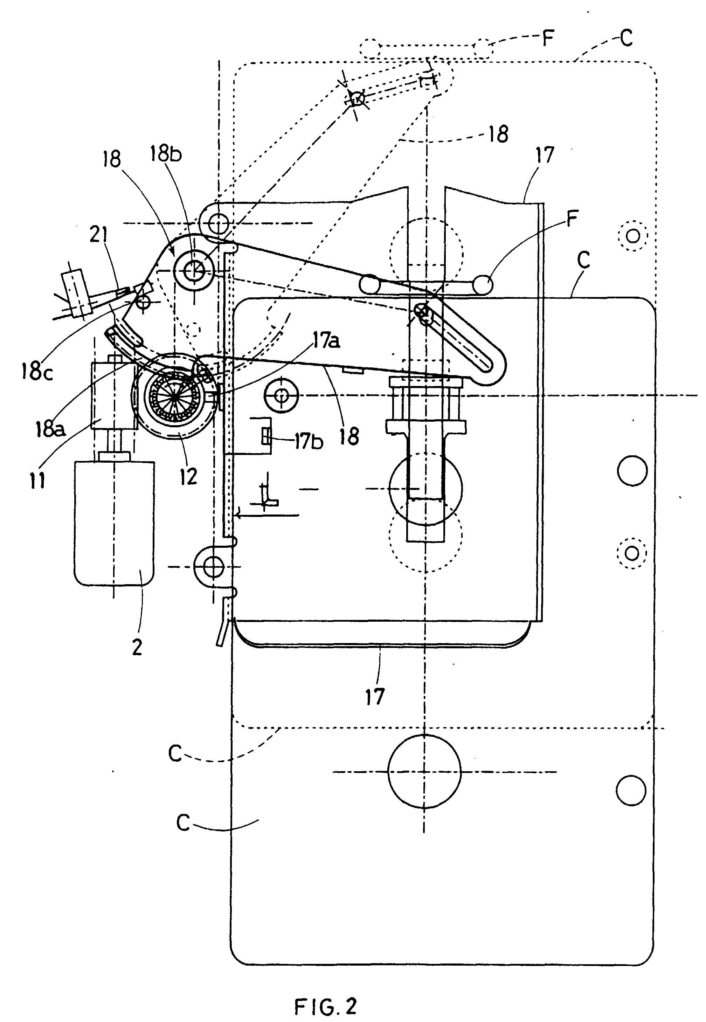

The other end gear (16) at the base of the shaft (13) engages with a rack (19a) being an integral part of a suitably shaped sliding block (19) (not illustrated in fig. 2), on which both the tape rollers (4b and 5b) and the tape reading head (20) are mounted.

Said sliding block (19) being characterized by an element (19b) which interferes at the end of the sliding block (19) run with a normally open micro-switch (21), which stops the motor (2) during the interference of the element (19b).

With reference to the above figures a description is now provided of the automatic insertion of the tape (C) by means of the second motor (2).

Attention is drawn to the fact that the toothed section (18a) of the ejection lever (18) is characterized by a tooth (18c) that keeps the micro-switch (21) closed while the ejection lever is at rest, in other words, when the tape (C) is not inserted (see figure 2).

When the tape (C) is inserted, the latter presses against the brake (F) coupled to the ejection lever (18) which is thus rotated around its pivoting pin (18b).

Attention is also drawn to the fact that the tape (c) couples automatically to brake (F).

The rotation of the lever (18) stops interference between its tooth (18c) and micro-switch (21), which by opening, starts up motor (2) which in turn automatically inserts the tape.

Start up of motor (2) pulls the tape (C) in rectilinear direction - following self-coupling of the brake (F) - by means of the ejection lever (18) which is rotated for the length of time that its toothed section (18a) engages with the gear (15).

During this time interval, the box (17) is immobile in view of the fact that its rod (17a) slides in section (14c) of cam (14) groove; continuing operation of the motor (2), rod (17a) enters and follows the helicoidal section (14b) of the groove, thereby lowering the box (17), being characterized by a bottom tooth (17b) which at the end of the downward stroke opposes a counter-tooth (19c) projecting from the above sliding block (19).

Following the interference between the tooth (17b) and the counter-tooth (19c), the sliding block (19) is moved sideways just enough to engage its rack (19a) with the gear (16), thereby causing the sliding block (19) forward until its element (19b) interferes with the micro-switch (21) which stops the motor (2).

Attention is drawn to the fact that as the sliding block (19) moves forwards, the box (17) is immobile, despite the fact that its pin (17a) permanently engages with cam (14) during its rotation, thanks to the fact that during the run of the sliding block (19), the pin (17a) slides within the circular section (14a) of the groove of the cam (14).

It is important to remember that the advancement of the sliding block (19) to the end of the run, corresponds to the start of the tape play-back, read by the head (20), being pulled by one of the two pins (4a or 4b) and recovered by one of the two clutches (8 or 9).

Pressing the fast forward or rewind button on the control panel, determines, on one hand, an adequate variation of the rotating speed of the first motor (1), and on the other, the simultaneous moving back of the sliding block (19) by means of the second motor (2) which is activated only for the very short time required to rotate the shaft (13) a portion of a turn corresponding to the moving back of the sliding block (19) but without lifting the box (17).

During ejection of the tape, the motor (2) reverses its direction with respect to the insertion phase and stops automatically when the tooth (18b) of the ejection lever (18) once again opposes the micro-switch (21).

## Claims

1. A device with soft touch mechanics for reproducing recorded tapes including a first electric motor (1), a second electric motor (2), whereby one motor performs all the main functions of the type consisting of a first kinematic motion for unwinding the tape during play-back, a second kinematic motion (C1) for rewinding of the tape during play-back and fast forward and rewind of the tape and a third kinematic motion for the insertion and automatic ejection of the tape (C); said device with soft touch mechanics being characterized in that the first two kinematic motions are operated by a first electric motor (1) which rotates at different speeds in both directions and which has an electronic control unit which determines the rotation speed of said first motor (1) according to the function selected on the push-button control panel of the appliance; further characterized in that the third kinematic motion is operated by the second electric motor (2) which is activated only during the insertion and automatic ejection phases of the tape and to determine the temporary moving away of the reading head (20) and of the stop rollers (4b and 5b) from the tape during the fast forward and rewind of the tape.

2. A a device with soft touch mechanics for reproducing recorded tapes according to claim 1, characterized in that the third kinematic motion includes:
- a worm screw (11) having a horizontal axis which engages with a geared wheel (12) keyed on a shaft (13) having a vertical axis on which a centre cam (14) and two end gears (15 and 16) are fixed.
Said cam (14) consists of a cylindrical body whose lateral surface has a groove characterized by an initial circular section (14a) at the base which continues with a helicoidal section (14b) to terminate at the top with a final circular section (14c);
- a normally open micro-switch (21), which stops the second motor (2) whenever it is closed or by the interference of a tooth (18c) on the ejection lever (18) or by the interference of an element (19b) on the sliding block (19) on which both the tape rollers (4b and 5b) and the reading head (20) are mounted;
- an angular toothed section (18a) engaging with said end gear (15) being a part of the ejection lever (18) which oscillates on a horizontal plane around a vertical pivoting pin (18b) coupled to the brake (F);
- a rack (19a) engaging with the other end gear (16) being part of the above sliding block (19);
- a tape holder box (17) characterized by a lateral pin (17a) engaged in the groove of the cam (14) and by a bottom tooth (17b) opposing, at the end of the downward stroke, a counter-tooth (19c) projecting from said sliding block (19).

3. A device with soft touch mechanics for reproducing recorded tapes according to claim 1, characterized in that the first motor (1) rotates, by means of a drive belt (3), the flywheels (4 and 5) on which pins (4a and 5a) for unwinding the tape during play-back, are keyed.

4. A device with soft touch mechanics for reproducing recorded tapes according to claim 1, characterized in that the first motor (1) operates the two clutches (8 and 9) on which the two pins are keyed for winding the tape by means of a kinematic motion (C1) consisting of a number of toothed engaging wheels, the last of which is mounted on a rocking lever (10) which oscillates to commute the transmission from one clutch wheel to another.

## Patentansprüche

1. Gerät zur Wiedergabe von bespielten Magnetbändern, ausgestattet mit "SOFT-TOUCH"-Mechanik, einem ersten Elektromotor (1) und einem zweiten Elektromotor (2), wobei ein einziger Elektromotor alle Hauptfunktionen ausführt, bestehend aus einem ersten Getriebe zum Transport des Bandes während des Abspielens, einem zweiten Getriebe (C1) zur Aufnahme des Bandes während des Abspielens und während des schnellen Auf- und Abspulens des Bandes, einem dritten Getriebe für das Einlegen und den automatischen Auswurf der Kassette (C); dadurch gekennzeichnet, daß die ersten beiden zuvor besagten Getriebe vom ersten Elektromotor (1) angetrieben werden, der in der Lage ist, sich in beiden Drehrichtungen unterschiedlich schnell zu drehen und von einem Elektroniksteuergehäuse unterstützt wird, welches die Drehzahl des besagten ersten Motors (1) je nach der auf der Bedienungs- und Programmierungstastatur des Geräts gewählten Funktion steuert; dadurch gekennzeichnet, daß das dritte Getriebe vom zweiten Elektromotor (2) angetrieben wird, der nur während des Einlegens und des Auswurfs der Kassette sowie zum vorübergehenden Entfernen des Abtastkopfes (20) und der Anpreßrollen (4b und 1b) während des Schnellvorlaufs und -rücklaufs des Bandes in Funktion tritt.

2. Gerät zur Wiedergabe von bespielten Magnetbändern, ausgestattet mit "SOFT-TOUCH"-Mechanik gemäß Anspruch 1, dadurch gekennzeichnet, daß das dritte Getriebe folgendeTeile umfaßt:
- eine Endlosgewindeschraube (11) mit Horizontalachse, die in ein Zahnrad (12) eingreift, welches auf eine Welle (13) mit Vertikalachse aufgezogen ist, auf welcher an den Außenseiten zwei Räderpaare (15 und 16) sowie eine Zentralnocke (14) befestigt sind, die aus einem zylindrischen Körper besteht, auf dessen Seitenfläche eine Rille angebracht ist, an deren Basis sich ein erster kreisrunder Abschnitt (14a) befindet, der in einen zentralen, schraubenförmigen Abschnitt (14b) übergeht und oben in einem letzten, ebenfalls kreisrunden Abschnitt (14c) endet.
- ein normalerweise offener Mikroschalter (21), der den zweiten Motor (2) jedesmal stoppt, wenn er entweder durch Einwirken eines auf dem Auswurfhebel befindlichen Zahnes (18c) oder durch Einwirken eines auf dem Schlitten (19) vorgesehenen Endstückes (19b) geschlossen wird, wobei der Schlitten sowohl mit Anpreßrollen (4b und 5b) als auch mit dem Kopf (20) zum Abtasten des Bandes ausgerüstet ist.
- ein gezahntes Eckstück (18a), das in das zuvor besagte, außenliegende Räderpaar (15) eingreift und zum Auswurfhebel (18) gehört, der auf einer Horizontalebene um einem vertikalen Drehbolzen (18b) schwingt und an der Bremse (F) eingehängt ist;
- eine Zahnstange (19a), die in das andere außenliegende Räderpaar (16) eingreift und Teil des zuvor besagten Schlittens ist;
- ein Kassettenkorb (17), der seitlich einen in die Rille der Nocke (14) einrastenden Stift (17a) und an der Unterseite einen Zahn (17b) aufweist, welcher am Ende des Abwärtslaufes einem Gegenzahn (19c) gegenübersteht, der aus dem zuvor besagten Schlitten (19) hervorsteht.

3. Gerät zur Wiedergabe von bespielten Magnetbändern, ausgestattet mit "SOFT-TOUCH"-Mechanik gemäß Anspruch 1, dadurch gekennzeichnet, daß der erste Motor (1) mittels eines Treibriemens (3) die Schwungräder (4 und 5) zum Drehen bringt, auf welche die Stifte (4a und 5a) aufgepreßt sind, die für den Transport des Bandes während des Abspielens sorgen.

4. Gerät zur Wiedergabe von bespielten Magnetbändern, ausgestattet mit "SOFT-TOUCH"-Mechanik gemäß Anspruch 1, dadurch gekennzeichnet, daß der erste Motor (1) die beiden Kupplungen (8 und 9) antreibt, auf welche die beiden Stifte aufgepreßt sind, die zum Aufwickeln des Bandes mittels eines Getriebes (C1) dienen, das aus mehreren ineinander eingreifenden Zahnrädern besteht, wobei letzeres auf einem Kipphebel (10) angebracht ist, dessen Schwingung den Übertragungswechsel von einer Kupplung auf die andere ermöglicht.

## Revendications

1. Appareil reproducteur de rubans magnétiques enregistrés, utilisant une mécanique "SOFT TOUCH", un premier moteur électrique (1), un second moteur électrique (2) et où un seul moteur électrique effectue toutes les principales fonctions, du type consistant en un premier mécanisme cinétique pour l'entraînement du ruban lors de la phase d'écoute, d'un deuxième mécanisme cinétique (C1) pour la récupération du ruban lors de la phase d'écoute et lors de la phase de déroulement et enroulement rapide du ruban, un troisième mécanisme cinétique pour l'introduction et l'expulsion automatique de la cassette (C); appareil caractérisé en ce que les deux premiers mécanismes cinétiques sont les deux activés par le premier moteur électrique (1), en mesure de tourner à vitesses diverses dans les deux sens de rotation et assisté par un central électronique de gestion et contrôle qui détermine le régime de rotation du ledit premier moteur (1) selon la fonction sélectionnée sur le clavier de commande et programmation de l'appareil; et caractérisé en ce que le troisième mécanisme cinétique est activé par le second moteur électrique (2) qui ne fonctionne que pendant la phase d'introduction et expulsion de la cassette ou pendant l'éloignement temporaire du ruban de la tête de lecture (20) et des rouleaux presse-ruban (4b et 5b) pendant la phase de déroulement et d'enroulement rapide du ruban.

2. Appareil reproducteur de rubans magnétiques enregistrés, utilisant une mécanique "SOFT TOUCH", selon la rev. 1, caractérisé en ce que le troisième mécanisme cinétique comprend:
- Une vis sans fin (11), ayant axe horizontal, qui engrène avec une roue dentée (12), calée le long d'un arbre (13) ayant axe vertical, sur lequel deux engrenages d'extrémité (15 et 16) ainsi qu'une came centrale (14) sont fixés, came qui consiste en un corps cylindrique sur la surface latérale duquel est incise une rainure présentant à sa base un premier segment (14a) circulaire, se poursuit avec un segment central (14b) hélicoïdal et terminant, sur sa partie supérieure, par un demier segment (14c), lui aussi circulaire;
- Un micro-interrupteur (21), normalement ouvert, qui arrête le second moteur (2) chaque fois qu'on le ferme ou suite à l'interférence d'une dent (18c) prévue sur le levier d'expulsion (18) ou suite à l'interférence d'une appendice (19b) prévue sur le traîneau (19), sur lequel sont montés, soit les rouleaux presse-ruban (4b et 5b), soit la tête de lecture du ruban (20);
- Un secteur angulaire denté (18a), engrenant avec ledit engrenage d'extrémité (15) et faisant partie du levier d'expulsion (18), qui résulte oscillant sur un plan horizontal autour d'un pivot de rotation verticale (18b) et couplé au frein (F);
- Une crémaillère (19a) engrenant avec l'autre engrenage d'extrémité (16) et faisant partie intégrante du prédit traîneau (19;
- Un logement porte-cassette (17) présentant latéralement un pivot (17a) engagé dans la rainure de la came (14) et inférieurement une dent (17b) qui contraste, à fin de course de descente, avec une contre-dent (19c) forjettante du ledit traîneau (19).

3. Appareil reproducteur de rubans magnétiques enregistrés, utilisant une mécanique "SOFT TOUCH", selon la rev. 1, caractérisé en ce que le premier moteur (1) fait tourner, à l'aide d'une courroie de transmission (3), les volants (4 et 5) sur lesquels sont calés les pivots (4a et 5a) pour l'entraînement du ruban lors de la phase d'écoute.

4. Appareil reproducteur de rubans magnétiques enregistrés, utilisant une mécanique "SOFT TOUCH", selon la rev. 1, caractérisé en ce que le premier moteur (1) entraîne les deux embrayages (8 et 9) sur lesquels sont calés les deux pivots députés à l'enroulement du ruban par le biais d'un mécanisme cinétique (C1) formé de plusieurs roues dentées, engrenées entre elles, dont la dernière résulte installée sur un levier à balancier (10) qui, oscillant, permet la commutation de la transmission d'une roue d'embrayage à une autre.
